Europäisches Patentamt

European Patent Office

Office européen des brevets

(19)

(11) Veröffentlichungsnummer: **0 042 106**
**A1**

# (12) EUROPÄISCHE PATENTANMELDUNG

(21) Anmeldenummer: **81104266.2**

(22) Anmeldetag: **03.06.81**

(51) Int. Cl.³: **C 08 L 27/06, C 08 L 25/16**

(30) Priorität: **14.06.80 DE 3022400**

(43) Veröffentlichungstag der Anmeldung: **23.12.81**
**Patentblatt 81/51**

(84) Benannte Vertragsstaaten: **DE FR GB IT NL**

(71) Anmelder: **BASF Aktiengesellschaft,
Carl-Bosch-Strasse 38, D-6700 Ludwigshafen (DE)**

(72) Erfinder: **Lindenschmidt, Gerhard, Dr., Buchenweg 11,
D-6906 Leimen (DE)**
Erfinder: **Dikow, Hermann, Dr., Birkenallee 74,
D-6832 Hockenheim (DE)**
Erfinder: **Foerster, Peter, Forster Strasse 5,
·D-6701 Dannstadt-Schauernheim (DE)**
Erfinder: **Roehrl, Eckhard, Dr., An der Bleiche 12,
D-6700 Ludwigshafen (DE)**
Erfinder: **Franz, Klaus-Dieter, Budapester Strasse 45,
D-6700 Ludwigshafen (DE)**
Erfinder: **Grittner, Franz, Lilienthalstrasse 3,
D-6944 Hemsbach (DE)**

(54) **Thermoplastische Formmassen.**

(57) Die Erfindung betrifft eine thermoplastische Formmasse aus 35 bis 60 Gew.-% eines Vinylchloridpolymerisates, 60 bis 20 Gew.-% eines Copolymerisates aus $\alpha$-Methylstyrol und Acrylnitril und 5 bis 20 Gew.-% eines Pfropfmischpolymerisates auf Basis von Polybutylacrylat als Propfgrundlage, das entweder Methylmethacrylat oder Mischungen aus Styrol und Acrylnitril als Pfropfhülle aufweist.

Zur Herstellung der Formmasse wird zunächst aus einer Mischung der Dispersionen des Copolymerisates und des Pfropfmischpolymerisates durch Sprühtrocknung ein rieselfähiges und staubarmes Festprodukt erzeugt, das mit Polyvinylchlorid in üblicher Weise abgemischt wird.

EP 0 042 106 A1

BASF Aktiengesellschaft    O.Z.0050/034505

Thermoplastische Formmassen

Die Erfindung betrifft thermoplastische Formmassen aus einem Vinylchloridpolymerisat, einem Copolymerisat auf Basis α-Methylstyrol und Acrylnitril sowie einem Pfropfmischpolymerisat, das auf Basis eines vernetzten Polybutylacrylatkautschukes als Pfropfgrundlage aufgebaut ist.

Polyvinylchlorid ist wegen seiner Beständigkeit gegen Chemikalien und gegen Witterungseinflüsse vielseitig verwendbar. Nachteilig ist seine niedrige Erweichungstemperatur, welche die Anwendung bei höheren Temperaturen einschränkt. Die Vicat-Erweichungstemperatur nach DIN 53 460 von Formmassen aus PVC liegt zwischen 70 und 80°C.

Es ist schon verschiedentlich versucht worden, die Wärmeformbeständigkeit von Polyvinylchlorid durch Zumischung von wärmeformbeständigen Copolymerisaten, wie  -Methylstyrol und AN bzw. Copolymerisaten von Styrol mit Maleinsäureanhydrid zu verbessern. Formteile aus derartigen Mischungen weisen jedoch keine ausreichenden mechanischen Eigenschaften aus, wie sie z.B. von ABS- bzw. ASA-Formmassen bekannt sind.

Ein Hauptanwendungsgebiet von Formteilen aus derartigen Formmassen sind Abflußrohre für Heißwasser. Die steigende Ausrüstung der Haushalte mit Waschmaschinen, Geschirrspülern und ähnlichen Geräten, die große Mengen heißen Wassers abgeben, hat dazu geführt, daß für verschiedene Kunststoffe eine DIN-Norm für Hochtemperaturprototypen eingeführt wurden. So gibt es z.B. bereits HT-Normen für brandschutzausgerüstetes Polypropylen, ABS/ASA und Polyäthylen.

Vo/BL

Es bestand daher die Aufgabe, billigere thermoplastische Formmassen mit hoher Wärmeformbeständigkeit auch nach Wasserlagerung, hoher Witterungsbeständigkeit und guter Schlagzähigkeit auf Basis von PVC zur Verfügung zu stellen, die die Mindestanforderungen an die Wärmeformbeständigkeit erfüllen. Die Forderung einer guten Witterungsbeständigkeit resultiert aus der Lagerung der Formteile im Freien nach der Herstellung, im Handel bzw. vor dem Einbau.

Diese Aufgabe wird erfindungsgemäß durch eine thermoplastische Formmasse gelöst, die i.w. enthält

A)　　35 bis 60 Gew.%, bezogen auf A + B + C, eines Vinylchloridpolymerisats,

B)　　60 bis 20 Gew.%, bezogen auf A + B + C, eines Copolymerisates aus

b1)　50 bis 80 Gew.% $\alpha$-Methylstyrol und

b2)　50 bis 20 Gew.% Acrylnitril und

C)　　5 bis 20 Gew.%, bezogen auf A + B + C, eines Pfropfmischpolymerisates auf Basis

c1)　eines vernetzten Polybutylacrylatkautschukes als Pfropfgrundlage die

c2)　entweder ausschließlich Methylmethacrylat oder Mischungen aus Styrol und Acrylnitril, gegebenenfalls unter Zuhilfenahme von Vernetzungsmitteln als Pfropfhülle aufweist, mit der Maßgabe, daß der Anteil der Pfropfgrundlage

c1)　60 bis 80 Gew.%, bezogen auf C, und der Anteil der Pfropfhülle

c2)　40 bis 60 Gew.%, bezogen auf C, beträgt.

Nach einer besonderen Ausbildung der Erfindung werden die Formmassen dadurch hergestellt, daß zunächst aus den Komponenten B und C durch Sprühtrocknung einer Mischung der

Dispersionen ein rieselfähiges und staubarmes Pulver hergestellt wird, das danach mit der Komponente A, d.h. dem Vinylchloridpolymerisat, in üblicher Weise abgemischt werden
kann.

Als Komponente A der erfindungsgemäßen Formmasse kommt handelsübliches Polyvinylchlorid in Betracht, das nach dem
Masse- oder Suspensionsverfahren hergestellt worden ist
und K-Werte im Bereich von 55 bis 70 aufweisen kann. Die
Komponente A wird in Mengen von 35 bis 60 Gew.%, bezogen
auf die Formmasse aus A + B + C, angewendet. Die Anwendung
von geringeren Mengen als 35 Gew.% PVC in der Formmasse
führt zu teureren Produkten; außerdem weisen derartige
Formmassen zu geringe Schlagzähigkeiten auf, d.h. sie
sind spröde. Bei Anwendung von PVC-Mengen oberhalb von
60 Gewichtsteilen wird der Erweichungspunkt zu niedrig.
Die Herstellung der Komponente A, d.h. von PVC, ist beispielsweise in Kainer "Polyvinylchlorid und Vinylchloridmischpolymerisate", Springer-Verlag, (1965), S. 12 ff.
beschrieben.

Als Komponente B der erfindungsgemäßen Formmasse wird ein
handelsübliches Copolymerisat aus $\alpha$-Methylstyrol und Acrylnitril in Mengen von 60 bis 20 Gew.-%, bezogen auf A + B
+ C, verwendet. Die Herstellung dieser Copolymerisate kann
nach den dem Fachmann bekannten Methoden erfolgen. Die
Viskositätszahl der Komponente B kann im Bereich von 50
bis 90 liegen, gemessen in DMF bei 25°C in 0,5 Gew.-%iger
Lösung. Der Acrylnitrilgehalt des Copolymerisates soll
20 bis 50 Gew.%, vorzugsweise 25 bis 45 Gew.% betragen.
Zur erfindungsgemäß bevorzugten Herstellung der Formmasse
wird das Copolymerisat, nach dem Emulsions-Verfahren als
30 bis 50 %ige wäßrige Dispersion gewonnen und zusammen
mit einer Dispersion der nachstehend beschriebenen Pfropfmischpolymerisate (Komponente C der erfindungsgemäßen Formmasse) sprühgetrocknet.

Das Pfropfmischpolymerisat C der erfindungsgemäßen Formmasse wird in Mengen von 5 bis 20 Gew.%, bevorzugt von 7 bis 14 Gew.-%, bezogen auf die Komponenten A + B + C der Formmasse, angewendet. Das Propfmischpolymerisat ist auf Basis eines vernetzten Polybutylacrylates als Pfropfgrundlage aufgebaut. Das Pfropfmischpolymerisat soll einen Elastomeranteil von 60 bis 80 Gew.%, bezogen auf das Pfropfmischpolymerisat, und einen Pfropfhüllenanteil von 20 bis 40 Gew.% aufweisen. Die Herstellung von Polybutylacrylatkautschuken ist dem Fachmann beispielsweise aus der DE-AS 12 60 135 bekannt. Sie wird bevorzugt in Emulsion durchgeführt, wobei zur Einstellung bestimmter Teilchengrößen von mehr als 0,1 um sich der Fachmann bekannter Techniken bedienen kann (Saatlatex-Fahrweise oder Agglomeration). Der Elastomeranteil des Pfropfmischpolymerisates muß vernetzt sein.

Die Vernetzungsmittel können in Mengen von 0,01 bis 4,0 Gewichtsteilen, bezogen auf die Pfropfgrundlage angewendet werden. Bei den Vernetzungsmitteln handelt es sich um die üblichen mit den Acrylaten mischpolymerisierbaren polyfunktionellen Monomeren mit zwei oder mehreren nichtkonjugierten $\rangle C=C\langle$-Gruppen je Molekül. Beispielsweise seien genannt Äthylenglykoldimethacrylat, Triäthylenglykoldimethacrylat, Tetraäthylenglykoldimethacrylat, Trimethylenpropantrimethacrylat, Allylacrylat, Diallylphthalat, Triallylcyanurat, Triallylisocyanurat, Divinylbenzol, Divinyltoluol sowie der Acrylester des Tricyclodecenylalkohols.

Die als Pfropfgrundlage verwendeten Kautschuke müssen elastomere Eigenschaften haben. Ein Maß für die elastomere Eigenschaft ist die Glastemperatur nach Illers und Breuer, Kolloidzeitschrift 176, S. 110 (1961). Sie soll unterhalb von -15°C liegen. Dies ist der Fall für ein Polybutylacrylat, das bevorzugt angewendet wird. Die anderen Alkylacrylate, wie Ethylacrylat sowie Ethyl-hexyl-acrylat sind für die erfindungsgemäße Formmasse weniger gut geeignet. Der Elastomeranteil der Pfropfgrundlage soll 60 bis 80 Gew.%, bezogen auf das Pfropfmischpolymerisat, betragen. Für die Pfropfhülle verbleiben somit 20 bis 40 Gew.%.

Als Monomere für die Ausbildung der Pfropfhülle kommen entweder nur Methylmethacrylat oder Mischungen aus Styrol und Acrylnitril, gegebenenfalls unter Mitverwendung von Vernetzungsmitteln, in Frage. Im Falle der Verwendung von Mischungen aus Styrol und Acrylnitril werden diese Monomeren in einem Bereich von 60 bis 80 Gew.% Styrol und 20 bis 40 Gew.% Acrylnitril bei der Pfropfreaktion angewendet. Die Herstellung des Pfropfmischpolymerisates erfolgt in der dem Fachmann bekannten Art und Weise, wobei die Emulsionspolymerisation bevorzugt angewendet wird. Die Kautschukteilchen sollen eine Teilchengröße von oberhalb 0,1 µm, insbesondere im Bereich von 0,25 bis 0,40 µm aufweisen. Die Herstellung derartiger Teilchengrößen für die Pfropfgrundlage ist dem Fachmann an sich bekannt. Sie erfolgt durch Saatlatexfahrweise bzw. durch Agglomerationstechniken. Die Pfropfung erfolgt vorzugsweise durch Polymerisation der Monomeren in Gegenwart einer wäßrigen Emulsion des Kautschuks. Dabei werden die üblichen Emulgatoren und Katalysatoren in üblichen Mengen angewendet.

Die Herstellung der erfindungsgemäßen Formmasse erfolgt bevorzugt durch Sprühtrocknung einer Mischung der Dispersionen der Komponente B und C. Es hat sich gezeigt, daß die Sprühtrocknung sowohl eines Copolymerisates aus $\alpha$-Methylstyrol und Acrylnitril in den beanspruchten Bereich der Zusammensetzung, als auch die Sprühtrocknung einer Dispersion des Pfropfmischpolymerisates z.B. mit Styrol/Acrylnitril als Pfropfhülle, je für sich allein unter Anwendung üblicher Bedingungen für die Sprühtrocknung zu einem nichtrieselfähigen Pulver führt.

Es bestand daher die Aufgabe, für die Herstellung der erfindungsgemäßen Formmasse eine geeignete Methode zu suchen. Überraschenderweise gelingt die gemeinsame Sprühtrocknung einer Mischung der Dispersionen der Komponente B und C der erfindungsgemäßen Formmasse. Mischt man die genannten Dispersionen bei Feststoffgehalten im Bereich 30 bis 50 Gew.% in Verhältnissen von 60:5 bis 5:20, bezogen auf B + C, so kann nach der Sprühtrocknung unter üblichen Bedingungen eine gut fließende und staubarme Pulvermischung erhalten werden, aus der dann durch Vermischen mit Polyvinylchlorid in üblichen Mischorganen, die erfindungsgemäßen Formmassen hergestellt werden können.

Der rieselfähigen Pulvermischung aus den Komponenten B und C der erfindungsgemäßen Formmasse werden außerdem bevorzugt die üblichen Zusatzstoffe, wie Stabilisatoren, Schmiermittel, Füllstoffe und dgl. bei dem Mischungsvorgang mit dem Polyvinylchlorid zugegeben.

Die erfindungsgemäßen Formmassen können nach den bekannten Verfahren der Thermoplastverarbeitung verarbeitet werden, also z.B. durch Extrudieren, Spritzgießen, Kalandrieren, Hohlkörperblasen, Pressen oder Sintern. Besonders bevorzugt werden aus den erfindungsgemäßen Formmassen Rohre für Abwasserleitungen, die höheren Temperaturen ausgesetzt sind, hergestellt.

Für die in den Beispielen und Vergleichsversuchen beschriebenen Formmassen wurden die nachfolgenden Komponenten A, B und C verwendet:

A: Es wurde ein handelsübliches Suspensions-Polyvinyl-chlorid mit einem K-Wert von 65 eingesetzt.

B: Als Komponente B wurde ein Mischpolymerisat der azeotropen Zusammensetzung von 69 Teilen $\alpha$-Methylstyrol und 31 Teilen Acrylnitril mit einer Viskositätszahl von 65 verwendet. Die Herstellung des Mischpolymerisates erfolgte in Emulsion. Dabei wurde eine 40 %ige, wäßrige Polymerdispersion erhalten.

C: Es wurden die nachfolgend beschriebenen Pfropfmischpolymerisate $C_1$, $C_2$ und $C_3$ eingesetzt. Ihre Pfropfhüllenanteile betrugen jeweils 30 Gew.%, ihre Elastomeranteile 70 Gew.%, jeweils bezogen auf das gesamte Mischpolymerisat. Die bei der Herstellung verwendeten Zusammensetzungen der Monomerengemische können der Tabelle 1 entnommen werden. Die Polymerisation wurde in wäßriger Emulsion nach der folgenden allgemeinen Vorschrift durchgeführt:

Herstellung der Kautschukdispersion

In einem Rührautoklaven wird ein Gemisch von

335 Teilen Wasser
17,5 Teilen einer Saatlatex-Dispersion
0,88 Teilen Mononatriummonohydrogencarbonat
0,45 Teilen Tetranatriumdiphosphat und
0,90 Teilen Dikaliumperoxidisulfat

vorgelegt. Bei der Saatlatex-Dispersion handelt es sich um eine 40 %ige wäßrige Dispersion eines Mischpolymerisates aus 98 Teilen Butylacrylat und 2 Teilen des Acrylesters des Tricyclodecenylalkohols mit einem mittleren Teilchendurchmesser ($d_{50}$-Wert der Massenverteilung) von 0,08 μm. Die Saatlatex-

0042106

-Dispersion wurde entsprechend der Vorschrift für Polymerisatdispersion A von Beispiel 2 C in der DE-AS 12 60 135
hergestellt.

In einem separaten Kessel wird ein Zulauf durch Emulgieren
von 343 Teilen eines Monomerengemisches, dessen Zusammensetzung in Tabelle 1 unter "Elastomeranteil" angegeben ist,
in 300 Teilen Wasser unter Zugabe von 1,75 Teilen des Natriumsalzes eines Alkylsulfonsäuregemisches mit 12 bis
18 Kohlenstoffatomen im Alkylrest vorbereitet.

In die Vorlage wird ein 20tel des Zulaufs eingemischt. Es
wird auf die Polymerisationstemperatur von 60°C aufgeheizt.
15 Minuten nach Erreichen der Polymerisationstemperatur
wird der Rest des Zulaufes innerhalb von 4 Stunden gleichmäßig zugegeben. Anschließend wird der Reaktionsansatz zum
nahezu vollständigen Auspolymerisieren noch 2 Stunden auf
der Temperatur von 60°C gehalten. Es resultierte eine
35 %ige wäßrige Polymerisatdispersion mit einem mittleren
Teilchendurchmesser ($d_{50}$-Wert) von 0,3 $\mu$m.

Herstellung der Pfropfkautschuk-Dispersionen $C_1$, $C_2$ und $C_3$

In einem Rührautoklaven wird ein Gemisch von

    80 Teilen Wasser
  800 Teilen der vorstehend beschriebenen Kautschuk-
        Dispersion
    4 Teilen des Natriumsalzes des vorstehend beschrie-
        benen Alkylsulfonsäuregemisches und
    3 Teilen Dikaliumperoxidisulfat

vorgelegt. Nach Aufheizen auf die Polymerisationstemperatur
von 75°C wird innerhalb von 3 Stunden als Zulauf das Monomere oder das Monomerengemisch, wie es in Tabelle 1 für den Pfropfhüllenanteil aufgeführt ist, gleichmäßig zugegeben. Zum nahezu vollständigen Auspolymerisieren wird der Reaktionsansatz noch anschließend 3 Stunden auf Polymerisationstemperatur gehalten. Es resultiert eine 40 %ige wäßrige Polymerisatdispersion.

Tabelle 1

| Pfropfmisch-polymerisat | Zusammensetzung des | |
|---|---|---|
| | Elastomeranteils | Propfhüllen-anteils |
| $C_1$ | 98 BA/2 ATD | 100 MMA |
| $C_2$ | 98 BA/2 ATD | 75S/25 AN |
| $C_3$ | 98 EHA/2 ATD | 75S/25 AN |

BA = Butylacrylat

EHA = Ethylhexylacrylat

ATD = Acrylester des Tricyclodecenylalkohols

MMA = Methylmethacrylat

S = Styrol

AN = Acrylnitril

Die in den Beispielen und Vergleichsversuchen enthaltenen Meßwerte wurden nach den folgenden Methoden bestimmt. Die Vicat-Erweichungstemperatur wurde an einem Walzfell geprüft. Die Erweichungstemperatur wurde nach DIN 53 460, Methode B, bestimmt. Die Erweichungstemperatur nach Vicat wurde nach einer Wasserlagerung von 16 Stunden bei 90°C erneut nach DIN 53 460, Methode B, bestimmt. Als Maß für die Wetterfestigkeit wurde der Fallbolzentest gemäß DIN 53 443 herangezogen. An stabilisierten Rohren wurde mittels des Fallbolzentestes die Wetterfestigkeit in Abhängigkeit von der Belichtungsdauer in Sonnenstunden gemessen. Die Meßgröße im Stoßversuch ist die Schädigungsarbeit bei 50 % Bruchrate ($A_S$ 50).

0042106

Nachstehend wird die Erfindung anhand von Beispielen und Vergleichsversuchen näher erläutert. Die in diesen Beispielen und Versuchen genannten Teile und Prozente beziehen sich, wenn nichts anderes vermerkt ist, auf das Gewicht.

Beispiele 1 und 2

Aus den Komponenten A, B sowie $C_1$ und $C_2$ wurden die erfindungsgemäßen Formmassen D und E durch Mischen hergestellt. Die Zusammensetzung der Formmassen sowie ihre Vicat-Temperaturen nach Trocknung und Wasserlagerung sind zusammen mit den entsprechenden Werten für eine nicht-erfindungsgemäße Formmasse F in der Tabelle 2 aufgeführt.

Vergleichsversuch

Aus den Komponenten A, B und $C_3$ wurde die Formmasse F zum Vergleich hergestellt.

In der Tabelle 3 ist die Witterungsbeständigkeit der erfindungsgemäßen Formmassen D und E zusammen mit der nicht--erfindungsgemäßen Formmasse F in Abhängigkeit von der Zeit dargestellt. Ein Vergleich der erhaltenen Werte des Fallbolzentestes zeigt, daß überraschenderweise die mit Polybutylacrylat als Pfropfgrundlage ausgestatteten Formmassen D und E verglichen mit einer Formmasse, die ebenfalls ein Polyacrylat, nämlich Polyäthyl-hexyl-acrylat, als Pfropfgrundlage enthält, eine erheblich verbesserte Mechanik bei Bewitterung aufweist.

Der Einfachheit halber wurden für die Formmassen D, E und F die Komponenten $B/C_1$, $B/C_2$ und $B/C_3$ nach der labormäßig leichter zugänglichen Walzentrocknung aufgearbeitet.

0042106

## Beispiel 3

In diesem Beispiel wird das bevorzugte Verfahren zur Sprühtrocknung einer Mischung der Dispersionen der Komponenten
B und C am Beispiel der Kombination $B/C_2$ beschrieben. Die
Herstellung der Emulsionsmischung erfolgte im Rührbehälter
durch gleichzeitiges Einleiten der Ausgangsemulsion B und
$C_2$ im Verhältnis 4 : 1. Anschließend wurde eine 1/2 Stunde
zur weiteren Homogenisierung gerührt. Die so erhaltene
Emulsionsmischung wurde unter folgenden Bedingungen sprühgetrocknet:

| | | |
|---|---|---|
| Trocknertemperatur im Eingang | | 160-180°C |
| " im Ausgang | | 50- 80°C |
| Heißgasstrom ($N_2$) | | 37 000 $Nm^3$/Stunde |
| Emulsionsdosierung | | 1,6 $m^3$/Stunde |
| Düsenzahl | | 24 |
| Druck vor den Düsen | | ca. 15 bar. |

Für die Sprühtrocknung wurde ein handelsüblicher Trockner
der Firma Nubilosa verwendet. An einer Probe des erhaltenen Produktes wurde im Ford-Becher die Rieselfähigkeit
zu 1,68 g/sec bestimmt. Die Abmischung dieser rieselfähigen und staubarmen Mischung mit Polyvinylchlorid vom
K-Wert 65 ergab eine Formmasse, die dieselben Bewitterungseigenschaften und mechanischen Eigenschaften aufweist wie
die Formmasse E, die in dem Beispiel 2 beschrieben ist.

Tabelle 2

| Formmasse | Zusammensetzung | | | | | Vicattemperaturen | |
| | A | B | $C_1$ | $C_2$ | $C_3$ | vor | nach Wasserlagerung |
| --- | --- | --- | --- | --- | --- | --- | --- |
| D | 50 | 40 | 10 | | | 92,2 | 89,2 |
| E | 50 | 40 | - | 10 | | 92,1 | 88,4 |
| F | 50 | 40 | - | - | 10 | 91,4 | 88,6 |

Tabelle 3

| Sonnen-stunden | Formmasse | | |
| | D | E | F |
| --- | --- | --- | --- |
| 0 | 90[1] | 82[1] | 59[1] |
| 72 | 93 | 83 | 58 |
| 157 | 85 | 77 | 57 |
| 284 | 85 | 79 | 41 |
| 403 | 42 | 66 | 43 |
| 502 | 45 | 61 | 34 |
| 578 | 28 | 42 | 30 |
| 605 | 27 | 39 | 32 |
| 749 | 21 | 32 | 18 |
| 1247 | 14 | 30 | 14 |
| 1744 | 5 | 5 | 4 |

[1] Schädigungsarbeit in Nm bei 50 % Bruchrate $(A_S\ 50)$

0042106

## Patentansprüche

1. Thermoplastische Formmassen, enthaltend i.w.

A) 35 bis 60 Gew.%, bezogen auf A + B + C, eines Vinylchloridpolymerisates,

B) 60 bis 20 Gew.%, bezogen auf A + B + C, eines Copolymerisates aus

b1) 50 bis 80 Gew.% $\alpha$-Methylstyrol und

b2) 20 bis 50 Gew.% Acrylnitril und

C) 5 bis 20 Gew.% eines Pfropfmischpolymerisates auf Basis

c1) eines Polybutylacrylates als Pfropfgrundlage, die entweder

c2) ausschließlich Methylmethacrylat oder Mischungen aus Styrol und Acrylnitril als, gegebenenfalls vernetzte, Pfropfhülle aufweist, mit der Maßgabe, daß der Anteil der Pfropfgrundlage

c1) 60 bis 80 Gew.%, bezogen auf C), und der Anteil der Pfropfhülle

c2) 40 bis 20 Gew.%, bezogen auf C), beträgt.

2. Verfahren zur Herstellung von Formmassen gemäß Anspruch 1, wobei zunächst aus einer Mischung der Dispersionen der Komponenten B und C durch Sprühtrocknung ein rieselfähiges und staubarmes Festprodukt erzeugt wird, das dann mit Polyvinylchlorid in üblicher Weise abgemischt wird.

3. Formteile aus Formmassen gemäß Anspruch 1.

| | **EINSCHLÄGIGE DOKUMENTE** | | | **KLASSIFIKATION DER ANMELDUNG (Int. Cl. ³)** |
|---|---|---|---|---|
| Kategorie | Kennzeichnung des Dokuments mit Angabe, soweit erforderlich, der maßgeblichen Teile | | betrifft Anspruch | |
| X | GB - A - 1 400 848 (BASF AG.) <br><br> * Patentansprüche 1,3 und 8; Seite 2, Zeilen 14 bis 31 * <br><br> --- | | 1,3 | C 08 L 27/06 <br>     25/16 |
| A | US - A - 3 251 904 (L. SOUDER et al.) <br><br> * Patentansprüche 1 und 5; Beispiel 12 * <br><br> -------- | | 1 | |

**RECHERCHIERTE SACHGEBIETE (Int. Cl. ³)**

C 08 L 25/12
        25/16
        27/06
        51/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde

⁃ liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort Den Haag | Abschlußdatum der Recherche 23-09-1981 | Prüfer HOFFMANN |
|---|---|---|